# EUROPÄISCHE PATENTSCHRIFT

(11) **EP 1 767 818 B1**
(45) Veröffentlichungstag und Bekanntmachung des Hinweises auf die Patenterteilung: **14.12.2011**
(21) Anmeldenummer: 06120165.3
(22) Anmeldetag: 06.09.2006
(51) Int. Cl.: F16H 55/17, F16H 57/04

(54) **Zahnrad**
Toothed wheel
Roue dentée

(30) Priorität: 26.09.2005 DE 102005045938
(43) Veröffentlichungstag der Anmeldung: 28.03.2007
(73) Patentinhaber: ROBERT BOSCH GMBH, 70442 Stuttgart (DE)
(72) Erfinder: Guettinger, Joachim, 77855 Achern (DE); Gabriel De Dias, Orlando, 76131 Karlsruhe (DE); Mueller, Erich, 77815 Buehl-Vimbuch (DE)

(56) Entgegenhaltungen:
- WO-A1-2004/020876
- DE-A1- 2 848 206
- DE-A1- 10 205 199
- JP-A- 2003 207 031
- SU-A1- 898 191
- US-A1- 2002 014 133
- US-A1- 2005 160 857

## Beschreibung

Die Erfindung betrifft ein Zahnrad, insbesondere eines Schneckengetriebes gemäß dem Oberbegriff des Anspruchs 1.

Die aus dem Stand der Technik bekannten Zahnräder werden in der Regel durch ein Ölbad oder durch ein Schmierfett geschmiert. Insbesondere bei Schneckengetrieben wird das Zahnrad vor dem Zusammenbau eines Getriebes mit Schmierfett versehen, welches dann dem Zahnrad für die gesamte Lebensdauer zur Verfügung stehen muss. Häufig reicht das Schmierfett jedoch nicht für die gesamte Lebensdauer aus, so dass es zu einem Trockenlauf des Zahnrades kommt. In Folge des Trockenlaufes wird das Zahnrad überhitzt, so dass das Getriebe ausfallen kann und auch umliegende Bauteile beschädigt werden können.

Zur Verhinderung eines schnellen Trockenlaufens des Zahnrades und damit einer Überhitzung schlägt das Dokument US 2002/0014133 A1 vor, eine Nut an dem Zahnrad mittig auszubilden, die sich über den Umfang des Zahnrades verstreckt und diese Nut als Schmiermitteldepot mit Schmiermittel zu versehen. Aus dieter Nut kann Schmiermittel auf die rechts und links von der Nut angeordneten Zahnflanken des Zahnrades fließen. Die Verteilung des Schmiermlttels aus den Zahnflanken des Zahnrades erfolgt hier ungerichtet, so dass auch weiterhin die Gefahr eines Trockenlaufens des Zahnrades besteht

Die Erfindung hat die Aufgabe, ein Zahnrad dahingehend zu verbessern, dass die oben genannten Nachteile zukünftig reduziert werden.

Die Efindung löst die gestellte Aufgabe mit den Merkmalen des kennzeichnenden Teils des Anspruchs 1.

An dem erfindungsgemäßen Zahnrad, Insbesondere eines Schneckengetriebes, ist erfindungsgemäß ein Schmiermitteldepot vorgesehen. Durch das Schmiermitteldepot werden die Zahne des Zahnrades während des Betriebes kontinuierlich mit Schmiermittel versorgt, so dass die Gefahr eines Trockenlaufens und einer Überhitzung des Zahnrades reduziert wird. Folglich wird die Betriebssicherheit eines Getriebes gewährleistet und werden umliegende Bauteil geschont.

Das Schmiermitteldepot kann auf einfache Weise am Zahnrad integriert werden, wenn es ein an einen Zahnkranz in axialer Richtung anschließender Depotring ist.

Um das Schmiermittel, das bei Schneckengetrieben in der Regel ein Schmierfett ist, auf dem Depotring bevorraten zu können, können auf dem Depotring Spalten angeordnet sein.

Damit das Schmiermittel in Lücken zwischen den Zähnen zur Verfügung steht, um somit eine optimale Schmierung zu gewährleisten, können die Spalten in den Lücken zwischen den Zähnen münden.

Wenn die Spalten auf dem Depotring enger sind als die Lücken zwischen den Zähnen, insbesondere, wenn die Spalten auf dem Depotring Kapillaren bilden, kann das Schmiermittel langsam in die Lücken zwischen den Zähnen geleitet werden. Somit kann das Schmiermittel über einen möglichst langen Zeitraum zur Schmierung den Lücken zugeführt werden.

Das Zahnrad kann im Bereich des Depotrings seinen größten Außendurchmesser aufweisen. Dadurch kann auf dem Depotring eine möglichst große Menge an Schmiermittel gespeichert werden.

Wenn das Zahnrad ein Kunststoffzahnrad ist, kommen die erfindungsgemäßen Vorteile besonders gut zum Tragen, da Kunststoffzahnräder besonders schnell bei Trockenlauf verschleißen und bei Überhitzung empfindlich reagieren.

Außerdem betrifft die Erfindung eine Scheibenwischvorrichtung, die erfindungsgemäß ein Zahnrad nach einem der Ansprüche 1 bis 7 aufweist.

Nachfolgend wird ein Ausführungsbeispiel anhand der beiliegenden Zeichnungen näher erläutert.

Im Einzelnen zeigen:
- Fig. 1: eine Schnittansicht durch ein erfindungsgemäßes Zahnrad;
- Fig. 2: eine perspektivische Draufsicht auf das Zahnrad aus Fig. 1.

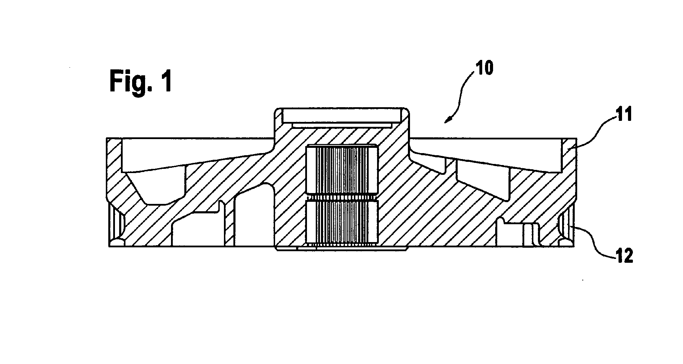

Fig. 1 zeigt ein Zahnrad 10 mit einem Depotring 11. Der Depotring 11 schließt sich in axialer Richtung an einen Zahnkranz 12 an.

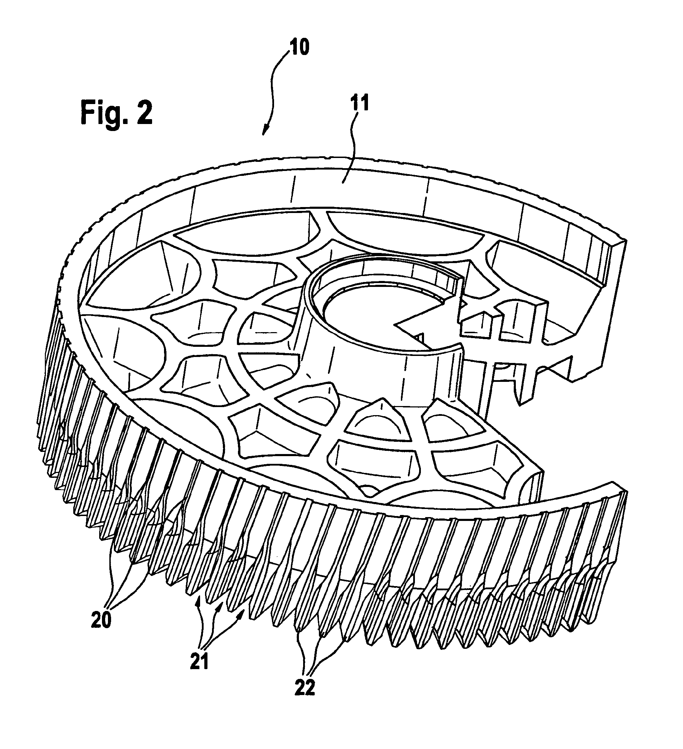

Auf dem Depotring 11 sind Spalten 20 angeordnet (siehe Fig. 2), in denen ein Schmiermittel bevorratet wird.

Die Spalten 20 münden in Lücken 21 zwischen den Zähnen 22 ein. Somit kann das Schmiermittel gezielt in die Lücken 21 fließen und dort für eine zuverlässige Schmierung sorgen.

Die Spalten 20 sind enger als die Lücken 21, wobei die Spalten 20 vorzugsweise als Kapillaren ausgebildet sein können. Dadurch kann das Schmiermittel langsam in die Lücken 21 gelangen, so dass das Schmiermittel über einen möglichst langen Zeitraum zur Schmierung den Lücken 21 zugeführt werden kann.

Das Zahnrad 10 weist im Bereich des Depotrings 11 seinen größten Außendurchmesser auf (siehe Fig. 1). Durch diese konstruktive Maßnahme kann auf einfache Weise eine möglichst große Menge an Schmiermittel gespeichert werden.

## Patentansprüche

1. Zahnrad (10), insbesondere eines Schneckengetriebes, welches ein Schmiermitteldepot aufweist, das ein sich an einen Zahnkranz in axialer Richtung anschließenden Depotring (11) ist, wobei auf dem Depotring (11) Spalten (20) angeordnet sind, die in Lücken zwischen den Zähnen münden, **dadurch gekennzeichnet, dass** die Spalten (20) auf dem Depotring (11) enger sind als die Lücken (21) zwischen den Zähnen (22).

2. Zahnrad (10) nach Anspruch 1, **dadurch gekennzeichnet, dass** es im Bereich des Depotrings (11) seinen größten Außendurchmesser aufweist.

3. Zahnrad (10) nach Anspruch 1 oder 2, **dadurch gekennzeichnet, dass** es ein Kunststoffzahnrad ist.

4. Scheibenwischvorrichtung, insbesondere für ein Kraftfahrzeug, **dadurch gekennzeichnet, dass** sie ein Zahnrad (10) nach einem der Ansprüche 1 bis 3 aufweist.

## Claims

1. Toothed wheel (10), in particular of a worm gearing, said toothed wheel having a lubricant repository which is a repository ring (11) which adjoins a toothed ring in the axial direction, wherein gaps (20) are arranged on the repository ring (11), which gaps open into spaces between the teeth, **characterized in that** the gaps (20) on the repository ring (11) are narrower than the spaces (21) between the teeth (22).

2. Toothed wheel (10) according to Claim 1, **characterized in that** said toothed wheel has its greatest external diameter in the region of the repository ring (11).

3. Toothed wheel (10) according to Claim 1 or 2, **characterized in that** it is a plastic toothed wheel.

4. Windscreen wiper device, in particular for a motor vehicle, **characterized in that** it has a toothed wheel (10) according to one of Claims 1 to 3.

## Revendications

1. Roue dentée (10), en particulier pour un engrenage à vis sans fin, qui présente un dépôt de lubrifiant qui est constitué par une bague à dépôt (11) se raccordant à un pignon dans la direction axiale, des fentes (20) étant disposées sur la bague à dépôt (11), lesquelles débouchent dans des vides entre les dents, **caractérisée en ce que** les fentes (20) sur la bague à dépôt (11) sont plus étroites que les vides (21) entre les dents (22).

2. Roue dentée (10) selon la revendication 1, **caractérisée en ce qu'**elle présente dans la région de la bague à dépôt (11) son plus grand diamètre extérieur.

3. Roue dentée (10) selon la revendication 1 ou 2, **caractérisée en ce qu'**il s'agit d'une roue dentée en plastique.

4. Dispositif d'essuie-glace, en particulier pour un véhicule automobile, **caractérisé en ce qu'**il présente une roue dentée (10) selon l'une quelconque des revendications 1 à 3.
